# EUROPEAN PATENT APPLICATION

(11) **EP 1 035 069 A2**
(43) Date of publication of application: **13.09.2000**
(21) Application number: 00500011.2
(22) Date of filing: 25.01.2000
(51) Int. Cl.: B66F 7/08

(54) **Conveyor trolley for moving vehicles**

(30) Priority: 11.03.1999 ES 9900511
(71) Applicant: CESVIMAP- Centro de Experimentacion y Seguridad Vial Mapfre, S.A., 05004 Avila (ES)
(72) Inventor: Fernandez Fadrique, Luis, 05004 Avila (ES); del Rio Saiz, Fernando, 05004 Avila (ES)
(74) Representative: Elzaburu, Alberto de

(57) **Abstract**

A conveyor trolley for moving vehicles comprising a frame (10) upon which two elastomer platforms (5) seat on which the vehicle is supported and which may be raised by means of the action of a series of pressurized medium cylinders (3) which transmit the movement to a set of connecting rods (9, 25, 26) which finally determine the transmission of the movement which determines the raising and/or lowering of the elastomer platforms (5). There are motors with reducing gears (114) for the linear movement of the elastomer platforms (5). The trolley also has safety devices (129, 130, 131) to prevent the possibility of accidents, crashes or running over involving any type of object or person.

The trolley is intended particularly for the movement of automobiles in painting areas of workshops, these vehicles being taken from the side.

## Description

The present invention refers to a conveyor trolley for moving vehicles, intended particularly for moving automobiles in painting areas in workshops, the said vehicles being taken from the side. The dimensions of the carriage are made to be standard for any current automobile and its design allows the vehicles to be taken by their side running boards without causing damage or warping to any part of the said vehicles.

A series of systems for transport and/or towing are already known, as well as for parking vehicles. Thus, European Patent 0 236 278 issued in the name of SOSTEC S.R.L., filed on 9th September 1987, refers to a device for the mechanical parking of vehicles, which includes a conveyor intended for the transport of vehicles made up of an internal framework provided with wheels and motors for the movement of the conveyor along a series of rails. An external framework is connected to the said internal structure by means of vertical movements which have a set of teeth aligned to support the wheels of a vehicle. These teeth may be engaged with the teeth of a fixed frame to allow the conveyor to pick up the vehicle from the fixed frame by raising the external framework or depositing it on the fixed structure by detaching the external framework.

European Patent 0 275 004, in the name of Giorgio Bragaglia, filed on 20th July 1988, claims an automatic storage for automobiles, which is provided with stacked adjointly compartments, opposite to and facing each other, in which the automobiles are stored by means of a robotized conveyor comprising telescopic, bilateral rakes, adapted to penetrate into both rakes arranged at the bottom of each compartment and constituting the supporting base for the stored automobiles. The movement of the robotized conveyor is effected by means of a conveyor-elevator which runs upon rails, which does not have a winch or counterweights, for which reason it is particularly fast and reliable and performs all the horizontal, vertical or coordinated movements required for the rapid and reliable positioning of automobiles.

European Patent 0 442 248, filed on 21st August 1991 in the name of S.A.F. - SISTEMI AUTOMAZIONI FLESSIBILI - S.P.A. refers to a monorail conveyor system and a corresponding trolley operated by a motor. The system comprising at least one trolley operated by a motor provided with two driving wheels with a different rolling radius, which are fixed coaxially together. The driving wheel with the smaller diameter is arranged so as to turn upon a raised track located correspondingly to the parts of the rail in which it is necessary to reduce the speed of the carriage.

The Spanish Utility Model 1018305, filed on 17th July 1991 in the name of SERVICIOS GENERALES DEL AUTOMOVIL, S.A. claims a device for towing vehicles upon an horizontal surface. This device comprising towing chains situated parallel to each other which carry the rotating transverse bars for towing the vehicle, characterized in that the upper sections of the towing chains, situated at a level higher than that of the flat supporting surface of the vehicle's wheels, directly constitute the limiting sides of the flat towing surface for the vehicle's wheels and are liable to be brought into direct contact with the said wheels at the same linear speed as that of the movement of the vehicle being towed.

The applicant intends to improve the trolleys for conveying or storing vehicles that have been known up to the present time, to which end he proposes a trolley for moving vehicles, particularly for moving automobiles in painting areas of workshops, which, according to the invention, is characterized in that it comprises a frame upon which two elastomer platforms are seated, upon which the vehicle is supported and which may be raised by means of the pneumatic action of a series of pressurized medium cylinders, preferably four in number. These cylinders transmit the movement to a set of connecting rods made up of a base connecting rod which is actuated directly by the cylinders, a connecting rod which is actuated by the base connecting rod and which in turn pulls on a main connecting rod, which transmits the final movement determining raising and lowering, respectively, of the elastomer platforms. The trolley also includes a set of motors with reducing gears, specifically four, which are provided with a brake that can be applied directly to each one of the wheels of the trolley for moving vehicles, the said wheels rolling on a guide rail. They also have, according to the invention, an optical signaling beacon, sirens activated by movement, photocells, specially arranged in a number of four, arranged two on each side in the direction of movement, intended to detect any obstacle in the carriage's path of movement and a pneumatic brake, which is complementary to the respective brake of the motors with reducing gears.

In accordance with the invention, in the trolley that is the object of the application there is an electrovalve, preferably four-way, which regulates the actuation of the different hydraulic cylinders.

Likewise, in accordance with the invention, the optical signaling beacon is automatically actuated when the trolley begins to move.

The trolley that is the object of this application is electrically and pneumatically supplied, the connection is made in both cases by means of coilers provided with hoses and located in recesses underneath the movement guiding rail.

Another feature of the carriage for moving vehicles that is the object of the invention is that the frame, as well as the other components that determine the movement of the carriage, are protected by means of a fairing made up of a side protection for the carriage, a side protection cover for the motors with reducing gears and a central protection cover for the pneumatic components and those that raise the trolley.

There follows a description of a preferred embodiment of the trolley for moving vehicles that is the object of the invention, where reference will be made to the accompanying drawings. It must be understood that these drawings represent exclusively a particularly preferred embodiment of the object of the invention, and that they do not in any way limit the scope of this invention. The drawings show:
Figure 1 is a plan view of the trolley for moving vehicles that is the object of the invention;
Figure 2 is a sectional view A-B of the trolley that is the object of the invention; and
Figure 3 is a sectional view C-D of the trolley for moving vehicles that is the object of the invention.

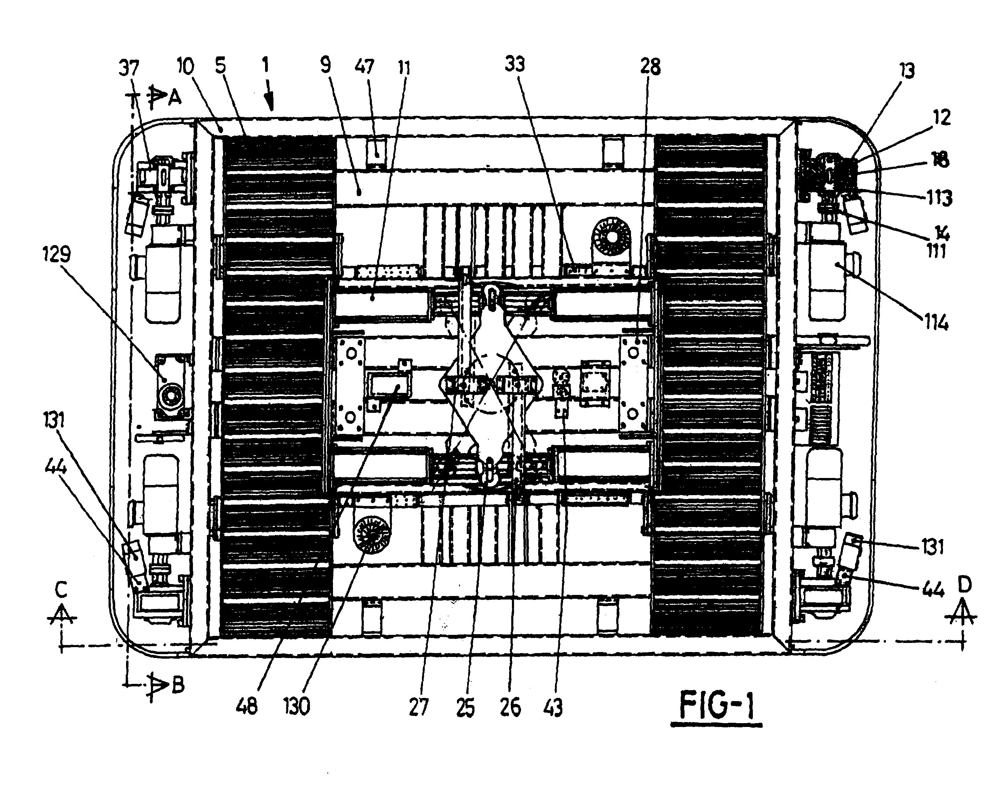

With reference to figure 1, it shows a plan view of the trolley (1) for moving vehicles. This trolley (1) is made up of a metal frame (10) which in the represented embodiment has dimensions of 2380 x 1630 mm and a height of 120 mm. This frame (10) is provided with two elastomer platforms (5), in figure 1 with dimensions of 1500 x 347 mm and a height of 78 mm, upon which the vehicle is supported, reaching a raised height of 450 mm. The raising systems of the carriage's (1) elastomer platforms (5) are in the central part of the carriage (1). In relation to these, the two elastomer platforms (5) with which each carriage (1) is provided are raised by means of four pneumatically actuated cylinders (11) which transmit the movement to a set of connecting rods. This set is made up of a base connecting rod (25) which is directly actuated by the cylinders (11); two connecting rods (26) which are actuated by the base connecting rod (25) and which, in turn, pull on a main connecting rod (9) which transmits the final movement to raise the elastomer platforms (5). The pneumatic actuation of the different cylinders (11) which determine the raising or descent of the elastomer platforms (5) is regulated by a four-way electro-valve (48). The base connecting rod (25) is joined to the connecting rods (26) by axes (27). The main connecting rod (9), for its part, has end supports (47) which both support the said main connecting rod (9) and determine the end of its movement.

In the sides of the trolley (1) for moving vehicles there are a series of safety devices, such as an optical signaling beacon (130) which is automatically actuated when the trolley (1) begins to move, both in the approach movement towards the vehicle and in the movement in which the vehicle is transported. Likewise, sirens (129) are provided, whose functioning is the same as that of the optical signaling beacons (130). Each carriage (1) also has a series of photocells (131), preferably four in number, two on each side in the direction of movement, which detect any obstacle in the path of the movement and automatically halt the trolley (1). Also, there is provided a pneumatic brake (not shown) is also foreseen as a complement to the brake incorporating each one of the electric motors which transmit the movement to the wheels. This pneumatic brake is automatically actuated when the movement is interrupted.

Also, in the sides of the trolley for moving vehicles that is the object of the invention the components which determine the movements of this trolley are arranged. These components and the frame (10) are protected by a fairing made up of a side protection (36) for the trolley (1), a side protection cover (37) for the motors with reducing gears (114) and a central protection cover (39) for the hydraulic components and those for raising the carriage (1). The photocells (131) with their corresponding supports (44) are found in this side area. In these sides the traction wheels (18) are also incorporated with their axes (12) and rigid ball bearing (113). These wheels are coupled (14, 111) to the motor with reducing gears (114). On one side of the trolley (1) there is also a horn (129).

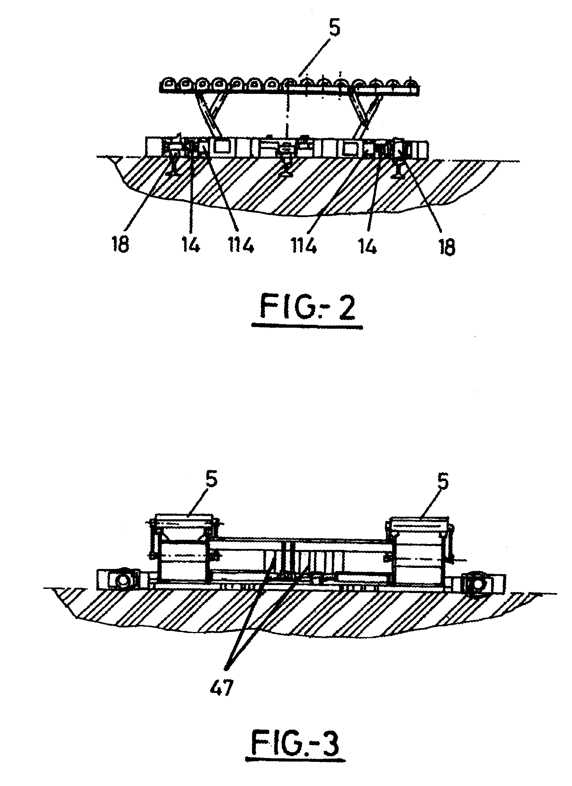

Referring now to figure 2, this shows a section, A-B, through the plan view of figure 1. As may be observed, in this case the elastomer platforms (5) are in a raised position. This figure also shows the trolley's movement systems with the different elements already disclosed upon in section with figure 1. In this case, they are the traction wheels (18) with their couplings (14) to the motor with reducing gears (114).

Figure 3 of the drawings shows a sectional view C-D taken from the trolley (1) shown in figure 1, as well as the elastomer platforms (5) in raised position. Here one may also see the end supports (47) of the main connecting rod (9).

It must be understood that the foregoing constitutes a preferred embodiment of the carriage for moving vehicles that is the object of the invention, and that a series of modifications and variations in the same will be evident to an expert in the art, and these modifications and variations must remain included in the scope of the present invention, which is limited only by the attached claims.

## Claims

1. A conveyor trolley for moving vehicles, specifically for moving automobiles in painting areas of workshops, these vehicles being taken from the side, characterized in that it consists of a frame (1) upon which two elastomer platforms seat (5) on which the vehicle is supported and which may be raised by means of the action of a series of pressurized medium cylinders (3), preferably four in number, which transmit the movement to a set of connecting rods (9, 25, 26), made up of a base connecting rod (25) which is directly actuated by the hydraulic cylinders (3), a connecting rod (26) which is actuated by the base connecting rod (25) and in turn pulls on a main connecting rod (9) which transmits the final movement which determines the raising and lowering respectively of the elastomer platforms (5); a set of motors with reducing gears (114), specifically four in number, which are provided with a brake that can be applied directly to each one of the wheels (18) of the trolley for moving vehicles, wheels (18) which roll on a guide rail; an optical signaling beacon (130); sirens (129) activated by the movement; photocells (13) specifically four in number, two on each side in the direction of movement, designed to detect any obstacle in the path of movement; and a pneumatic brake which is complementary to the respective brake of the motors with reducing gears.

2. A trolley for moving vehicles as claimed in claim 1, characterized in that an electrovalve, preferably four-way, is provided, which regulates the actuation of the different hydraulic cylinders (3).

3. A trolley for moving vehicles as claimed in claim 1, characterized in that the optical signaling beacon (130) is automatically activated when the carriage begins to move.

4. A trolley for moving vehicles as claimed in the foregoing claims, characterized in that the trolley is supplied electrically and pneumatically, the connection being made in both cases by means of coilers provided with hoses which are located in recesses underneath the movement guide rail.

5. A trolley for moving vehicles as claimed in the foregoing claims, characterized in that the frame (1), as well as the other components (3, 9, 25, 26, 114) which determine the trolley's movement, are protected by means of a fairing made up of a side protection (36) for the trolley, a side protection cover (37) for the motors (114) with reducing gears and a central protection cover (39) for the pneumatic components and those for raising the trolley.
